# FASCICULE DE BREVET EUROPEEN

(11) **EP 1 432 603 B1**
(45) Date de publication et mention de la délivrance du brevet: **15.08.2007**
(21) Numéro de dépôt: 02764916.9
(22) Date de dépôt: 14.06.2002
(51) Int. Cl.: B62D 5/04, B62D 25/08

(54) **VEHICULE AUTOMOBILE TRI-CORPS**
STUFENHECK-KRAFTFAHRZEUG
NOTCHBACK MOTOR VEHICLE

(30) Priorité: 15.06.2001 FR 0107886
(43) Date de publication de la demande: 30.06.2004
(73) Titulaire: Peugeot Citroen Automobiles SA, 92200 Neuilly sur Seine (FR)
(72) Inventeur: VINCENTI, Richard, F-90350 Evette-Salbert (FR)
(74) Mandataire: De Cuenca, Emmanuel Jaime
(86) Numéro de dépôt international: PCT/FR2002/002050
(87) Numéro de publication internationale: WO 2002/102641

(56) Documents cités:
- DE-A- 19 625 026
- US-A- 5 246 263
- PATENT ABSTRACTS OF JAPAN vol. 011, no. 296 (M-627), 25 septembre 1987 (1987-09-25) -& JP 62 088674 A (HONDA MOTOR CO LTD), 23 avril 1987 (1987-04-23)
- PATENT ABSTRACTS OF JAPAN vol. 1997, no. 01, 31 janvier 1997 (1997-01-31) -& JP 08 230714 A (HINO MOTORS LTD), 10 septembre 1996 (1996-09-10)
- PATENT ABSTRACTS OF JAPAN vol. 010, no. 234 (M-507), 14 août 1986 (1986-08-14) -& JP 61 067675 A (NISSAN MOTOR CO LTD), 7 avril 1986 (1986-04-07)

## Description

La présente invention concerne un véhicule automobile dit « tri-corps ».

Il faut comprendre ici et dans le cadre de l'invention qu'un véhicule automobile « tri-corps » est un véhicule avec quatre portes individuelles pour les occupants et pour lequel la caisse présente une première ligne de rupture entre le capot du moteur et le pare-brise et une seconde ligne de rupture entre la lunette arrière et le coffre du véhicule, la lunette arrière étant fixée à la caisse.

Dans ce type de véhicule, la tablette arrière fixe limite les possibilités de chargement car la communication entre le coffre et l'intérieur de l'habitacle est limitée lorsque la banquette arrière est rabattue. Cette limitation peut parfois être préjudiciable lorsqu'on cherche à charger des objets encombrants par le coffre. La publication JP-A-62088674 divulgue un véhicule d'après le préambule de la revendication.

Le but de l'invention est alors de pallier aux inconvénients précités et donc de proposer une caisse de véhicule tri-corps qui autorise le chargement d'objets encombrants par le coffre.

Pour ce faire, l'invention a pour objet une caisse de véhicule automobile tri-corps, comprenant, dans sa partie arrière, un plancher de charge arrière sur lequel sont fixés deux montants latéraux comportant chacun un passage de roue et un montant de custode latéral constituant une partie d'un côté de l'habitacle, les deux montants de custode latéraux étant maintenus entre eux dans leur partie supérieure par une traverse dite « traverse supérieure de lunette arrière » et adaptée pour soutenir le pavillon qui comporte en outre des moyens pour rigidifier au moins un montant latéral de manière à faire passer les efforts subis par le bas de ladite caisse au roulage du véhicule directement à la traverse supérieure.

Les moyens de rigidification comprennent un raidisseur de panneau de forme conjuguée au montant latéral de custode.

Avantageusement, les moyens de rigidification comprennent deux parties de cloison inférieure de custode d'épaisseur dimensionnée pour supporter les efforts et soudées au raidisseur.

Avantageusement, encore, les moyens de rigidification comprennent un renfort de levage d'épaisseur dimensionnée pour supporter les efforts.

L'invention concerne également un véhicule automobile tri-corps comprenant une tablette arrière adaptée pour recouvrir l'espace entre le coffre et au moins une partie de la banquette arrière rabattable caractérisée en ce que la tablette est amovible.

D'autres avantages et caractéristiques de l'invention seront mieux compris à la lecture de la description détaillée faite en référence aux figures suivantes qui représentent respectivement :
- figure 1 : une vue partielle en perspective de l'arrière d'une caisse de véhicule selon l'état de l'art ;
- figure 2 : une vue partielle en perspective de l'intérieur de l'arrière d'une caisse de véhicule selon l'invention ;
- figure 3 : une vue en perspective partielle de côté de l'arrière d'une caisse de véhicule selon l'invention.

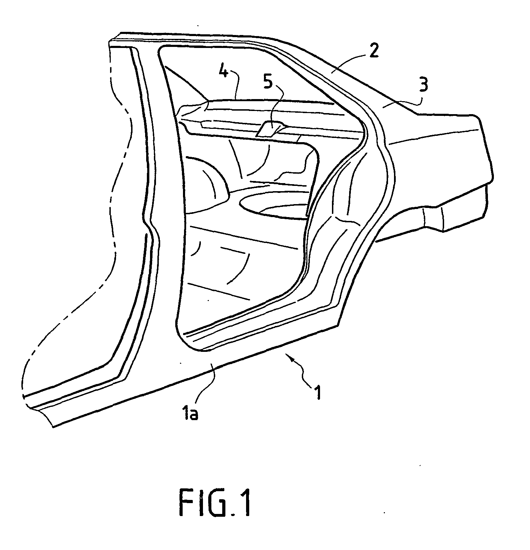

Sur la figure 1, on a représenté une caisse 1 d'un véhicule automobile tri-corps telle qu'elle sort actuellement d'un atelier de ferrage d'une unité de fabrication immédiatement avant qu'elle ne pénètre dans l'atelier de montage et après le passage en peinture.

Cette caisse 1 présente, dans sa partie arrière, deux montants latéraux 2 sous la forme de deux montants de custode latéraux 3. Ces montants 3 sont reliés entre eux d'une part dans sa partie supérieure par l'intermédiaire d'une traverse dite traverse supérieure de lunette arrière, disposée sous le pavillon, et d'autre part dans sa partie inférieure par l'intermédiaire d'une tablette 4 faite en métal embouti et d'une traverse dite traverse de lunette arrière inférieure 5.

Les extrémités latérales de la traverse supérieure non représentée et de la tablette 4 sont soudées à l'intérieur des montants de custode 3 et rigidifient ainsi la caisse. Les efforts subis par le bas de la caisse la au roulage passent selon cette configuration directement par la tablette 4.

La présence de cette tablette 4 est particulièrement gênante pour l'accessibilité de l'habitacle par le coffre, même lorsque la banquette arrière est complètement rabattue.

En outre, la capacité de chargement du véhicule tri-corps est réduite et il n'est pas possible de charger des objets encombrants.

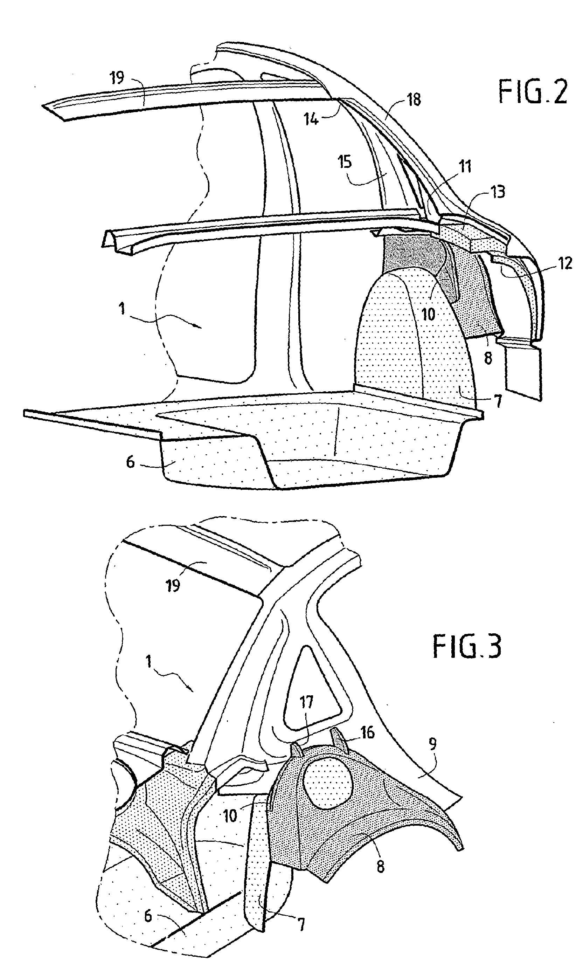

Pour résoudre ce problème, il est prévu une caisse dont le côté latéral droit de la partie arrière est représentée aux figures 2 et 3, le côté latéral gauche étant strictement identique.

Cette caisse 1 comporte de manière connue en soi un plancher de charge 6 auquel est soudé un premier sous-ensemble constitué d'un passage de roue 7 lui-même étant soudé à une doublure d'aile arrière 8, ces pièces étant soudeés dans leur partie supérieure à la fermeture de doublure d'aile 9 et la doublure de custode inférieure 10.

Sur ce sous-ensemble vient se souder un deuxième sous-ensemble constitué par un renfort de levage 11 renforcé (son épaisseur ayant été considérablement augmentée par rapport à ceux utilisés selon l'état de l'art) et par une doublure de gouttière arrière 12. L'asemblage entre ces deux sous-ensembles est réalisé par l'intermédiaire d'une tablette latérale arrière 13 et d'une doublure de custode supérieure 14. Ce deuxième sous-ensemble comporte également un raidisseur de panneau de côté 15 d'épaisseur importante et dont les dimensions sont telles qu'il épouse substantiellement la forme du montant de custode final 2.

Afin d'assurer une parfaite cohésion entre ces deux sous-ensembles, une cloison inférieure avant et arrière de custode 16,17 sont prévues et sont soudées au raidisseur du panneau de côté 15 et à la doublure d'aile 9 de manière à réaliser un nervurage entre les deux sous-ensembles précités. Pour parfaire l'assemblage et assurer une rigidité à l'ensemble ainsi constitué le côté de l'habitacle 18 est rapporté par soudure. L'assemblage avec la traverse supérieure de lunette arrière 19 est alors réalisé de manière connue en soi par soudure ainsi que celui avec la traverse inférieure de lunette arrière qui sert uniquement à loger la lunette arrière.

Avec une telle configuration, les efforts subis par le bas de la caisse au roulage du véhicule sont directement transmis à la traverse supérieure.

Cette caisse 1 permet d'utiliser une tablette arrière amovible qui ne participe pas à la rigidification de la caisse comme celle selon l'état de l'art. Celle-ci peut être de manière connue en soi être une tablette thermoformée en matière plastique ou tout autre système équivalent.

Lorsque l'on désire effectuer un chargement d'objets encombrants dans le véhicule tri-corps comprenant la caisse selon l'invention, il est alors aisé d'enlever la tablette arrière de la même manière qu'une tablette arrière de véhicule équipé d'un hayon et de rabattre la banquette arrière.

Bien entendu, il va de soi que de nombreuses modifications du dispositif peuvent être envisagées sans pour autant sortir du cadre de l'invention.

## Revendications

1. véhicule automobile tri-corps comprenant une tablette arrière adaptée pour recouvrir l'espace entre le coffre et au moins une partie d'une banquette arrière rabattable, ainsi qu'une caisse (1) comprenant, dans sa partie arrière, un plancher de charge arrière (6) sur lequel sont fixés deux montants latéraux (2) comportant chacun un passage de roue (7) et un montant de custode latérale (3) constituant une partie d'un côté d'habitacle, les deux montants de custode latéraux (2) étant maintenus parallèles entre eux dans leur partie supérieure par une traverse (19) dite « traverse supérieure de lunette arrière » et adaptée pour soutenir le pavillon, des moyens (11, 15, 16, 17) de rigidification pour rigidifier au moins un montant latéral de manière à faire passer les efforts subis par le bas de ladite caisse (1a) au roulage du véhicule directement à la traverse supérieure, **caractérisé en ce que** lesdits moyens de rigidification s'étendant de la traverse inférieure (5) de lunette arrière à celle supérieure (19) comprennent un raidisseur de panneau (15) de forme conjuguée au montant latéral de custode, et **en ce que** la tablette arrière est montée de manière amovible.

2. Véhicule selon la revendication 1, **caractérisé en ce que** lesdits moyens de rigidification comprennent au moins une cloison inférieure avant et arrière (16, 17) soudées au raidisseur de panneau (15) et à une doublure d'aile (9) de manière à réaliser un nervurage entre un premier sous-ensemble formé par un passage de roue (7), une doublure d'aile arrière (9) et une doublure de custode inférieure (10), et un second sous-ensemble formé par un renfort de levage (11) et une doublure de gouttière arrière (12).

3. Véhicule selon la revendication 1 ou 2, **caractérisé en ce que** la tablette arrière amovible est réalisée, par thermoformage, en matière plastique.

## Claims

1. Notchback motor vehicle comprising a rear parcel shelf designed to cover the space between the boot and at least part of a fold-down rear bench seat, and a body (1) comprising, in its rear part, a load-bearing rear floor pan (6) to which there are attached two lateral uprights (2), each containing a wheel arch (7) and a D-pillar (3) constituting part of a side of the cabin, the two D-pillars (2) being held mutually parallel in their upper part by a crossmember (19) known as the "rear window head rail" and designed to support the roof, stiffening means (11, 15, 16, 17) to stiffen at least one lateral upright so as to cause the loads experienced by the bottom of the said body (1a) as the vehicle is driving along to be transferred directly to the head rail, **characterized in that** the said stiffening means extending from the rear window bottom rail (5) to the top rail (19) comprise a panel stiffener (15) of a shape that is the conjugate of the D-pillar and **in that** the rear parcel shelf is mounted removably.

2. Vehicle according to Claim 1, **characterized in that** the said stiffening means comprise at least one front and rear lower partition (16, 17) which are welded to the panel stiffener (15) and to a wing lining (9) in such a way as to produce ribs between a first subassembly formed by a wheel arch (7), a rear wing lining (9) and a lower inner quarter panel (10) and a second subassembly formed by a lifter reinforcement (11) and a rear rain channel lining (12).

3. Vehicle according to Claim 1 or 2, **characterized in that** the removable rear parcel shelf is made of plastic by thermoforming.

## Patentansprüche

1. Kraftfahrzeug mit Stufenheck, umfassend eine Heckablage, die geeignet ist, den Raum zwischen dem Kofferraum und mindestens einem Abschnitt einer umklappbaren hinteren Sitzbank zu überdecken, sowie eine Karosserie (1), die in ihrem Heckteil eine Heckladefläche (6) aufweist, auf welcher zwei Seitensäulen (2) befestigt sind, jede umfassend einen Radkasten (7) und eine Seitenfenstersäule (3), die einen Abschnitt einer Fahrgastraumseite bilden, wobei die zwei Seitensäulen (2) in ihrem Oberteil von einem Querträger (19), "oberer Querträger der Heckscheibe" genannt und geeignet, das Dach zu tragen, parallel zueinander gehalten werden, Versteifungsmittel (11, 15, 16, 17), um mindestens eine Seitensäule derart zu versteifen, dass die Kräfte, die beim Rollen des Fahrzeugs auf das Karosserieunterteil (1a) ausgeübt werden, direkt auf den oberen Querträger übertragen werden, **dadurch gekennzeichnet, dass** diese Versteifungsmittel, die vom unteren Querträger (5) der Heckscheibe zum oberen (19) verlaufen, eine Wandversteifung (15) mit einer mit der Seitenfenstersäule verbundenen Form umfassen, und **dadurch**, dass die Heckablage auf abnehmbare Weise eingebaut ist.

2. Fahrzeug nach Anspruch 1, **dadurch gekennzeichnet, dass** die Versteifungsmittel mindestens eine vordere und hintere untere Wand (16, 17) umfassen, die derart an die Wandversteifung (15) und an ein Kotflügelblech (9) geschweißt sind, dass sie zwischen einer ersten Baugruppe, bestehend aus einem Radkasten (7), einem hinteren Kotflügelblech (9) und einem unteren Seitenfensterblech (10), und einer zweiten Baugruppe, bestehend aus einer Hebeverstärkung (11) und einem Regenrinnenblech (12), eine Rippe bilden.

3. Fahrzeug nach Anspruch 1 oder 2, **dadurch gekennzeichnet, dass** die abnehmbare Heckablage durch Warmformen aus Kunststoff hergestellt ist.
